# EUROPÄISCHE PATENTSCHRIFT

(11) **EP 1 874 975 B1**
(45) Veröffentlichungstag und Bekanntmachung des Hinweises auf die Patenterteilung: **29.11.2017**
(21) Anmeldenummer: 06721936.0
(22) Anmeldetag: 28.04.2006
(51) Int. Cl.: C23C 4/02, C23C 4/18, A47J 36/00, B05D 5/08

(54) **BESCHICHTETER GEGENSTANDSGRUNDKÖRPER**
COATED BASE BODY OF AN OBJECT
CORPS DE BASE D'UN OBJET PRESENTANT UN REVETEMENT

(30) Priorität: 29.04.2005 CH 7592005
(43) Veröffentlichungstag der Anmeldung: 09.01.2008
(73) Patentinhaber: Swiss Diamond International SA, 3960 Sierre (CH)
(72) Erfinder: HORT, Stefan, CH-3973 Venthône (CH)
(74) Vertreter: Modiano, Micaela Nadia
(86) Internationale Anmeldenummer: PCT/CH2006/000234
(87) Internationale Veröffentlichungsnummer: WO 2006/116888

(56) Entgegenhaltungen:
- EP-A- 0 358 804
- WO-A-01/36711
- DE-A1- 4 434 425
- US-A- 5 843 232
- US-B1- 6 342 272
- PATENT ABSTRACTS OF JAPAN Bd. 1995, Nr. 10, 30. November 1995 (1995-11-30) -& JP 07 184785 A (HITACHI HOME TEC LTD), 25. Juli 1995 (1995-07-25)

## Beschreibung

### Technisches Gebiet

Die Erfindung betrifft einen mit einer Beschichtung versehenen Gegenstandsgrundkörper, der aus Metall sein kann und vorzugsweise ein Küchengerät ist gemäss Oberbegriff des Patentanspruchs 1.

Unter einem Gegenstandsgrundkörper im Sinne der Erfindung, der mit einer Beschichtung versehenen ist, werden neben Küchengeräten, wie insbesondere Pfannen und Kasserollen auch Verkleidungen von Backöfen, Heizplatten, z.B. an Bügeleisen und elektrischen Grillplatten, Flächenheizelementen bzw. -strahlern usw. verstanden. Die Gegenstandsgrundkörper müssen nicht zwingend bei erhöhten Temperaturen ihren Einsatz haben; sie können auch bei Raumtemperatur und darunter eingesetzt werden. Bei höheren Temperaturen, wie sie beispielsweise im Küchenbereich auftreten, wird man metallische Grundkörper verwenden. Bei Niedertemperatur können auch Grundkörper aus Kunststoffen verwendet werden. Handelt es sich um Küchengeräte mit einem metallischen Grundkörper aus Aluminium oder Stahl ist eine Verwendung problemlos bei erhöhten Temperaturen, d. h. bei Temperaturen über 100°C bis zu 300°C möglich:

### Stand der Technik

Einen Antihafteffekt aufweisende Küchengeräte als beschichtete Gegenstandsgrundkörper sind aus der EP 0 365 485, der EP 0 719 594 und der EP 1 048 751 bekannt. Als oberste, eine freie Oberfläche aufweisende Schicht, also diejenige Schicht, welche jeweils mit den zu bratenden, zu kochenden bzw. zu dünstenden Lebensmitteln in Kontakt steht, ist jeweils eine Antihaftschicht aufgebracht.

Um eine gute Haftung der gesamten Beschichtung auf dem Grundkörper des Küchengerätes zu erreichen, raut die EP 0 365 485 diesen auf. Auf diese aufgeraute und erhitzte Oberfläche wird ein keramisches Material, wie beispielsweise Aluminiumoxid-Titanoxid-Pulvergemisch, thermisch aufgesprüht, In der EP 0 719 594 ist ein bahnenartiges Aufbringen von sich überlappenden Bahnen einer Hartstoffschicht beschrieben. Die EP 1 048 751 mischt in wenigstens eine der Schichten des Schichtenpaktetes Diamantkristalle bei, um eine harte und gut wärmeleitende Beschichtung zu erhalten.

### Aufgabe der Erfindung

Aufgabe der Erfindung ist es, einen mit einer Beschichtung versehenen Gegenstandsgrundkörper, insbesondere ein Küchengerät, herzustellen, bei dem einmal ein guter Schichtenverbund erreicht wird und bei dem die Antihaftwirkung und Selbstreinigung verbessert werden kann. In bevorzugter Weise soll der Schichtenverbund seine antihaftend und selbstreinigende Eigenschaft auch bei Temperaturen über 100°C beibehalten.

### Lösung der Aufgabe

Die obengenannte Aufgabe wird von einem mit einer Beschichtung versehener, vorzugsweise metallischer, Gegenstandsgrundkörper gemäß Anspruch 1 gelöst.

Weitere vorteilhafte Ausgestaltungen der Erfindung sind in den Unteransprüchen angegeben.

Auf einen Gegenstandgrundkörper, der auch metallisch sein kann, wird eine Beschichtung aufgebracht, welche wenigstens eine Schicht aufweist, deren Schichtmaterial ein Fasermaterial zugemischt ist. Das Schichtmaterial ist in der Regel pastös und wird in einem späteren Verfahrensschritt ausgehärtet.

Eine Herstellung von Schichten, welche Fasern enthalten, ist an sich bekannt. Bei den bekannten Schichten liegen die Fasern jedoch immer annähernd parallel zur Schichtober- bzw. -unterseite, wobei es sich um einzelne Fasern oder um Gewebe handeln kann. Gewebe werden deshalb verwendet, um sicher zugehen, dass keine Fasern aus der Schichtoberfläche herausstehen; d.h. Kennzeichen dieser Schichten ist eine glatte Oberfläche. Derartige Schichten mit glatten Oberflächen sind in der EP 1 238 785, der JP 07 255606 und der JP 07 184 785 beschrieben. US 5 693 236 A offenbart eine wasserabstoßende Beschichtung, die nadelförmige Fasern in einem Kunstharz aufweist. Die Erfindung ist nun entgegen der Lehre des Stands der Technik nicht mehr auf eine glatte Oberfläche aus.

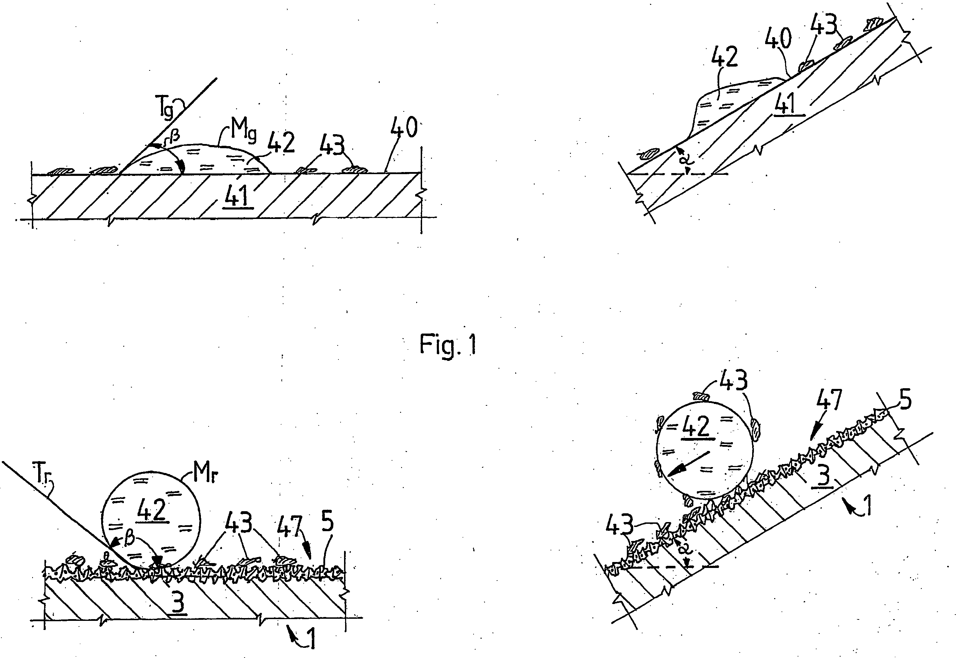

Die Fasern können nun dem Schichtmaterial vor der Schichterzeugung zugemischt werden. Das Gemisch wird dann als "Fasermus" auf den Grundkörper oder auf einer oder mehreren bereits vorhandenen Schichten auf dem Grundkörper aufgetragen und dann ausgehärtet. Das Fasermaterial und das Schichtmaterial wird man anteilmässig derart wählen, dass die Fasern einen "Filz" bilden und durch das später ausgehärtete Schichtmaterial zusammen gehalten wird. Es ist dann eine raue Obërfläche entstanden. Diese raue Oberfläche, wenn sie die freie Oberfläche einer Beschichtung, also z.B. bei einem Küchengerät die mit dem Koch- bzw. Bratgut in Berührung kommende, oberste Schicht ist, bewirkt nahezu unabhängig vom Schichtmaterial einen Antihafteffekt und/oder einen Selbstreinigungseffekt. Das Zustandekommen dieser beiden Effekte wird anhand von **Figur 1** erläutert:

Wird wenig Schichtmaterial verwendet, so tragen die grundmaterialreduzierten Bereiche zur Rauigkeit bei. Wird verhältnismässig viel Schichtmaterial verwendet, so wird die Rauigkeit hauptsächlich durch die die Oberfläche "ausbeulenden" Faserenden hervorgerufen.

In gewissem Sinn richtet sich die erzielte Rauhigkeit bei gleichen Materialeigenschaften des Schichtmaterials und der Fasern auch danach, wann die Fasern in die Schicht eingebracht werden. Werden nämlich die Fasern zuerst aufgebracht und dann erst das Schichtmaterial oder dem Schichtmaterial vor dem Beschichten die Fasern zugemischt, so sind die Fasern immer aufgrund der Oberflächenspannung des noch pastösen Schichtmaterials mit Schichtmaterial, wenn auch nur dünn, bei stark vorstehenden Faserenden überzogen. Werden die Fasern hingegen erst nach dem Aufbringen des pastösen Schichtmaterials auf dieses aufgebracht, so sinken die Fasern zwar in das Schichtmaterial ein und/oder können durch ein Überfahren mit einem Spachtel, Eindrücken mit einer Druckplatte usw., in dieses hineingedrückt werden, es werden aber immer aus der Schichtoberfläche herausragende Faserenden vorhanden sein. Diese herausragenden Faserenden geben einen guten Verzahnungseffekt, sofern auf diese Schicht eine weitere Schicht aufgebracht wird. Da in bevorzugter Weise Kohlefasern verwendet werden, können auch in der obersten freien Oberfläche über diese herausragende Faserenden vorhanden sein; Kohlefasern sind nicht gesundheitsgefährdend. Da die herausragenden Faserenden sehr kurz sind, widerstehen sie zudem mechanischen Belastungen ohne abzubrechen. Herausstehende Fasern tragen zur Erhöhung der Selbstreinigung und der Antihaftwirkung bei.

**Figur 1** zeigt oben links eine glatte, horizontal liegende Oberfläche **40** eines Gegenstands **41** mit einem Flüssigkeitströpfen **42.** In der Regel ist dieser Flüssigkeitstropfen **42** ein Wassertropfen, kann aber insbesondere bei Küchengeräten auch ein Öltropfen oder Saucentropfen sein. Auf der glatten Oberfläche befinden sich einige Schmutzpartikel **43.** Handelt es sich um einen Wassertropfen **42** so hat dieser auf der glatten Oberfläche **40** einen Kontaktwinkel **ß_{g}** von 40 ° bis 70 °. Der Kontaktwinkel **ß_{g}** ist der Winkel zwischen der glatten Oberfläche **40,** auf der der Tropfen **42** aufliegt, und einer Tangente **T_{g}** an den Tropfenmantel **M_{g}** ausgehend vom Auflagerand des Tropfens **42.** Wird nun die glatte Oberfläche **40** um einen Winkel α geneigt, wie rechts oben in **Figur 1** dargestellt, so verformt sich zwar der Tropfen **42,** bleibt aber zusammen mit den Schmutzpartikeln **43** haften.

Handelt es sich um eine raue Oberfläche **47,** wie in **Figur 1** links unten gezeigt ist, so vergrössert sich der Kontaktwinkel **ßᵣ,** der Tangente **Tᵣ** an den Tropfenmantel **Mᵣ** ausgehend vom Auflagerand des Tropfens **42**. Die Auflagefläche des Tropfens **42** hat sich verringert, wodurch auch die Haltekraft auf der Oberfläche **47** verringert worden ist. Der Tropfen **42** hat zudem eine Kontur erhalten, welche gegenüber der Tropfenkontur links oben einer Kugel stärker angenähert ist. Eine weitere Haltekraft Verringerung erfolgt zudem durch die Rauigkeit, da vereinfacht ausgedrückt, diese Kraft nur an den Erhebungen angreifen kann. Wird nun die raue Oberfläche **47** um denselben Winkel **a,** wie bei der glatten Oberfläche **40** geneigt, so perlt der Wassertropfen unter einer Mitnahme der Schmutzpartikel **43** ab (= Selbstreinigungseffekt). In analoger Weise ergibt sich eine Vergrösserung des Antihafteffektes. Analoges gilt auch für andere Tropfenmaterialien. Zu bratendes und garendes Gut oder anderes zu erhitzendes Gut liegt zudem nicht mehr flächig auf, worauf ein "Anbrennen" stark vermindert wird.

Die raue Oberfläche muss nun nicht nur durch die die Schichtöberfläche "ausbeulenden" Faserenden erzeugt werden, auch entlang der Schichtoberfläche verlaufende Fasern tragen zur Rauigkeit bei. Es muss lediglich eine strukturierte Oberfläche erzeugt werden.

Bei diesem Antihaft- und Reinigungseffekt kommt es auf den Abstand der Erhöhungen an. Erfindungsgemäß wird der Antihaft- und Reinigungseffekt bei Erhöhungen mit einem stochastischen Abstand zwischen 1 µm und 1000 µm erreicht. Da die unten verwendeten-Fasern vorzugsweise als Carbonfasern einen Durchmesser zwischen 2 µm und 8 µm haben, werden in vorteilhafter Weise stochastische Faserabstände zwischen 20 µm und 100 µm gewählt. Abstände in diesem Bereich ergeben eine leicht zu handhabende Fasermenge und lassen sich dem Schichtmaterial auch gut beigeben.

Es können auch gleichlange Fasern verwendet werden, deren Faserlänge grösser ist als die Schichtdicke. Im Wesentlichen von der Senkrechten (zum mittleren Schichtniveau) abweichende Fasern tragen zwar einiges zur Festigkeit der Schicht bei, jedoch nichts zum Antihaft- und Reinigungseffekt, sofern die Fasern mit Schichtmaterial umschlossen sind.

Es kann auch eine regelmässige Verteilung der Fasern erzeugt werden, in dem diese ausgerichtet werden. Eine Ausrichtung kann beispielsweise durch Rütteln (z.B. mit einer Ultraschallquelle) erfolgen. Nicht-leitende Fasern können beispielsweise durch elektrische Gleich- oder Wechselfelder sowie ferromagnetische Fasern durch magnetische Felder ausgerichtet werden. Eine Faserausrichtung ist jedoch aufwendig; gute Antihaft-, Selbstreinigungs- und Verzahnungseffekte wurden jedoch bei einer bedeutend preisgünstigeren stochastischen Verteilung erreicht.

Ist die raue, d.h. unebene, Schichtoberseite nicht mehr die oberste freie Oberfläche, sondern befindet sie sich innerhalb einer Beschichtung mit zwei oder mehreren Schichten, so ergibt sich eine Verzahnung mit der darauf nachfolgenden Schicht. Es kann auch eine Verzahnung mit der darunter liegenden Schicht erfolgen, sofern diese beim Aufbringen der Deckschicht erweicht wird und dann die Faserenden auch in diese Schicht eindringen. Die in das Schichtmaterial eingebrachten Fasern liegen in einer stochastisch willkürlichen Lage. Einige Faserenden würden somit die Schichtoberfläche durchstossen, sofern eine Oberflächenspannung das Schichtmaterial nicht über die Faserenden zieht. Die Kraft der Oberflächenspannung versucht zudem die Fasern wieder in die Schicht hineinzuziehen. Damit nun eine ausreichende Unebenheit gegen das Hineinziehen durch die Oberflächenspannung entstehen kann, sollten Fasern vorhanden sein, welche länger als die zu erzeugende Schichtdicke sind. Auch diese sind stochastisch verteilt; es sind aber immer einige vorhanden, welche auch annähernd in Richtung des Flächenvektors, d.h. etwa senkrecht zum zu erzeugenden mittleren Schichtniveau stehen. Zur Erzeugung dieser unebenen Oberfläche sollten mindestens zwanzig Gewichtsprozent der Fasern eine Faserlänge aufweisen, welche wenigstens fünf Prozent länger ist als die Schichtdicke. Die maximale Faserlänge ergibt sich aus den unten angegebenen Schichtdicken und einer maximalen Erhöhung im Schichtdickenprofil ausgelöst durch die Fasern, reduziert durch eine Materialumhüllung aufgrund der Oberflächenspannung. Die Oberflächenspannung des betreffenden Schichtmaterials ist aus den Datenblättern erhältlich oder auf einfache Weise experimentell zu ermitteln.

Als Deckschicht verwendet man vorzugsweise ein anithaftendes Schichtmaterial, wie Polytetrafluorethylen (PTFE), Perfluoralcyd (PFA), Fluorethylenpropylen (FEP) oder analoge Materialien, wobei durch die eingelagerten Fasern eine erhöhte Widerstandsfestigkeit gegen Verkratzen gegeben ist und die durch die Fasern erzeugte Aufrauung der Oberfläche ein Selbstreinigungseffekt hervorgerufen und ein Antihafteffekt verstärkt wird. Vorzugsweise wird man in die Deckschicht zur Unterstützung der mechanischen Härte Diamanten einlagern.

Es können unterschiedliche Beschichtungen, je nach spezieller Qualitätsanforderung, verwendet werden.

Ausgehend von der Oberfläche des Grundkörpers werden vier bewehrte, unterschiedliche Beschichtungen vorgeschlagen; andere Beschichtungen sind selbstverständlich verwendbar:
I. Hartstoffschicht - haftvermittelnde Schicht - Zwischenschicht - Antihaftschicht
II. Hartstoffschicht - haftvermittelnde Schicht - Antihaftschicht
III. haftvermittelnde Schicht - Zwischenschicht - Antihaftschicht
IV. haftvermittelnde Schicht - Antihaftschicht

Die Dicken der einzelnen Schichten sind derart zu wählen, dass einerseits möglichst eine in sich geschlossene Schicht beim Aufbringen gebildet wird und andererseits die Schicht nicht allzu dick ist, um den Materialverbrauch in Grenzen zu halten, eine Zeit für das Aushärten nicht unnötig ansteigen zu lassen und um eine entsprechende Haftfähigkeit und Stabilität zu gewährleisten. Als Schichtdicken haben sich 5 µm bis 150 µm bewährt.

Die beigemischten Fasern sollen, wie bereits oben ausgeführt, eine unebene Oberfläche erzeugen, welche sich mit einer nachfolgend aufzubringen Schicht auch verzahnen können. Um eine gute Verzahnung, einen Selbstreinigungseffekt bzw. eine Verstärkung des Antihaft-Effektes zu erhalten, werden Fasern verwendet, welche eine Länge aufweisen, welche Ortsfrequenzanteile mit Höhen und Tiefen im Oberflächenprofil einer fasertragenden Schicht erzeugen, welche stochastisch verteilt 0,1 µm bis 500 µm über einem mittleren ebenen Oberflächenprofil liegen. Diese Höhen haben vorzugsweise einen gegenseitigen, stochastischen Abstand zwischen 50 nm und 500 µm.

Die Fasern werden dem Schichtmaterial, in dem sie enthalten sind und eine Oberfläche mit den oben angegebenen Ortsfrequenzanteilen erzeugen, vor, nach oder während des Aufbringens zugegeben. Das Aufbringen der Schicht erfolgt in einer horizontalen Lage der zu beschichtenden Schicht bzw. des Grundkörpers. Da das Schichtmaterial vorzugsweise pastös ist, hat es eine gewisse Viskosität η. Die Viskosität η wird in Pas (Pascal-Sekunde = Nsm⁻² = kg/ms) angegeben. Je höher der Wert für η ist, desto zäher ist das Material. Wie stark nun bei einer horizontalen Lage die Oberfläche durch in einem Schichtmaterial enthaltene Fasern profiliert wird, hängt nun im Wesentlichen
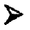 von der Faserdicke,
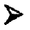 von der Faserdichte und
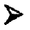 von der Viskosität, bezogen auf das spezifische Gewicht des pastösen Schichtmaterials, also der kinematischen Viskosität, und
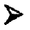 von der Oberflächenspannung des Schichtmaterials
ab. Die Viskosität und damit auch die Oberflächenspannung sind in der Regel temperaturabhängig. D.h. Viskosität und Oberflächenspannung werden sich in der Regel bei einem Aushärtevorgang der Schicht verändern. Da das "Einsinken" ("Einsickern") des Schichtmaterials infolge der vorhandenen Viskosität zeitabhängig ist, ist auch der Zeitraum bis zur Schichterhärtung für die zu erreichende Ortsfrequenzanteile zu berücksich- < tigen. Faserdichte und Abmessungen der Fasern wird man deshalb in Bezug auf das zu verwendende Schichtmaterial in Abhängigkeit der Prozessparameter (Aushärten) experimentell bestimmen.

Damit das das Fasermaterial aufweisende Schichtmaterial keine Gasblasen enthält, kann der gerade mit der faserhaltigen Schicht versehene Gegenstandsgrundkörper (z.B. Küchengerät) zum Ausgasen der Schicht einem reduzierten Umgebungsdruck ausgesetzt werden. Es können hierzu auch mechanische Rüttelfrequenzen verwendet werden. Es ist hierbei jedoch zu beachten, dass sich durch eine Druckreduzierung sowie durch eine ^eventuell aufgeprägte Rüttelung im noch unausgehärteten Schichtzustand die Ortsfrequenzanteife (Ortsfrequenzgemisch) bzw. der "Amplitude" (Höhen und Tiefen des Oberflächenprofils) verändern können. Auch dieser Einfluss lässt sich mit einigen einfachen fachmännischen Versuchen ermitteln.

Es können diverse Fasern verwendet werden. Bei einer Faserauswahl ist jedoch darauf zu achten, dass das Fasermaterial lebensmitteltechnischen Anforderungen, wie bei Küchengeräten gefordert, entspricht, da die Fasern in einer Schicht einer Beschichtung eines Küchengerätes verwendet werden. Gute Ergebnisse wurden mit Carbonfasern als Fasermaterial erreicht. Carbonfasern haben eine ausgezeichnete Stabilität, insbesondere Knickstabilität. Ferner sind Carbonfasern leicht und sie enthalten Tenside, sodass sie eine gute Einbettung im Schichtmaterial gewährleisten.

Anstelle von (Carbon-)Fasern können selbstverständlich auch sogenannte (Carbon-)-Tubes verwendet werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung von Ausführungsbeispielen der Erfindung verwendeten Zeichnungen zeigen in
- Fig. 1: eine schematische Darstellung eines Flüssigkeitstropfens auf einer ebenen glatten und einer rauen Oberfläche, wobei diese Oberflächen einmal eine horizontale Lage und ein anderes Mal eine gleiche, um einen Winkel α gegen die Horizontale geneigte Lage haben,
- Fig. 2: einen stark vergrösserten Querschnitt durch einen Grundkörper eines Küchengeräts, auf dem eine Beschichtung liegt, wobei die Beschichtung eine mit Fasern versetzte, haftvermittelnde Schicht direkt auf dem Grundkörper und eine auf der haftvermittelnden Schicht liegende Antihaftschicht hat, und
- Fig. 3: eine Variante eines beschichteten Küchengeräts analog zu **Figur 2** mit einer Beschichtung, welche eine Hartschicht, eine haftvermittelnde Schicht, eine Zwischenschicht und eine Antihaftschicht aufweist.

### Wege zur Ausführung der Erfindung

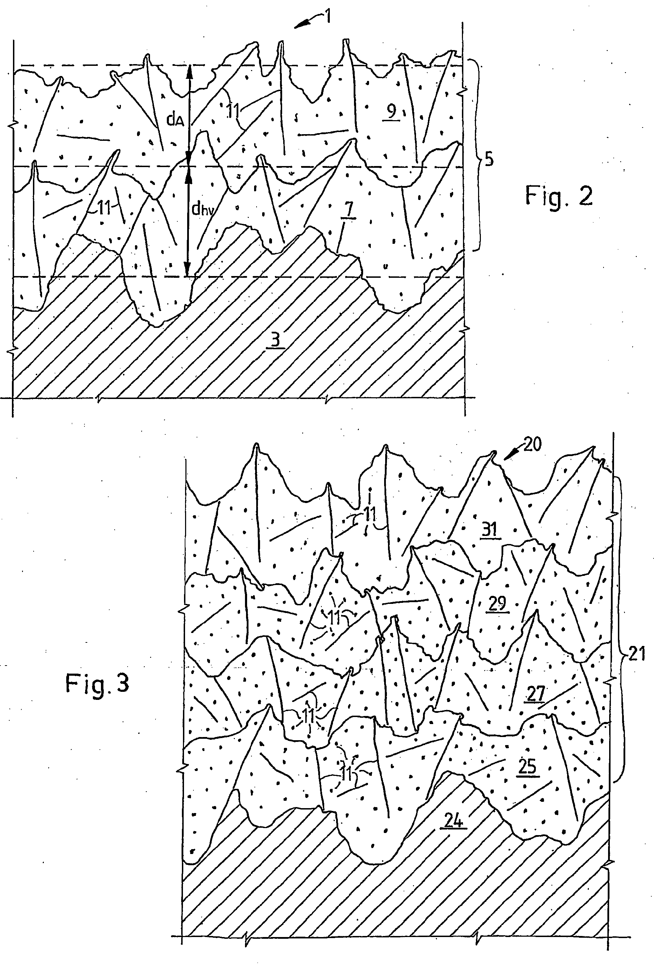

In **Figur 2** ist ein beschichtetes Küchengerät **1** (Gegenstandsgrundkörper) im Querschnitt dargestellt. Das Küchengerät **1** kann eine Pfanne, ein Topf, ein Backblech, eine Kasserolle oder auch ein Bügeleisen, eine Heizplatte einer Bügelmaschine usw. sein.

Das Küchengerät **1** hat einen aufgerauten Grundkörper **3,** auf dem eine Beschichtung 5 angebracht ist, welche eine gute Haftfähigkeit auf der Oberfläche des Grundkörpers besitzt und dessen freie Oberfläche antihaftend wirkt. Der Grundkörper ist in der Regel aus einer Aluminiumlegierung oder Stahl; andere Metalle sind jedoch möglich.

Die Beschichtung besteht erfindungsgemäss aus wenigstens einer Schicht, hier aus zwei Schichten, nämlich einer haftvermittelnden Schicht **7** und einer Antihaftschicht **9.** In der haftvermittelnden Schicht **7** sind Fasern **11** eingelagert. Die Fasern **11** haben unterschiedliche Längen und eine unterschiedliche Lage innerhalb der haftvermittelnden Schicht **7.** Die Länge der Fasern **11** ist jedoch derart gewählt, dass wenigstens zwanzig Prozent der Fasern **11 eine** Länge haben, welche wenigstens um fünf Prozent länger ist als die zu erzeugende gemittelte Schichtdicke **dₕᵥ** der haftvermittelnden Schicht **7.** Als Fasern **11** werden hier Carbonfasern verwendet. Carbonfasern haben den Vorteil der grossen Stabilität und der "Lebensmittelechtheit". Die Dicke **dₕᵥ** der haftvermittelnden Schicht **7** liegt typischerweise zwischen 5 µm und 50 µm und wurde hier beispielsweise mit 40 µm gewählt. Die Fasern **11** haben typischerweise eine Länge zwischen 20 µm und 100 µm.

Als Material für eine haftvermittelnde Schicht **7** kommt beispielsweise ein Produkt mit der Kennziffer 7131 von der Firma Whitford oder ein Material mit der Kennziffer 459-415 der Firma DuPont in Frage. In den beiden beispielsweisen Materialien können Keramikpartikel z.B. aus Aluminiumdioxid (Al₂O₃) mit einem Durchmesser von 5 µm bis 40 µm zugemischt sein.

Auf der haftvermittelnden Schicht **7** liegt eine Antihaftschicht **9** mit einer gemittelten Schichtdicke **d_{A}** vom 7 µm. Auch die Antihaftschicht **9** enthält analog zur haftvermittelnden Schicht **7** Fasern **11.** Die Fasern **11** sind hier beispielsweise in beiden Schichten der Einfachheit halber in der Herstellung gleich gewählt worden. Es können jedoch Fasern unterschiedlicher Dicke und unterschiedlicher Fasermaterialien in den Schichten verwendet werden. Die Faserlängen richten sich nach der zu erreichenden Schichtdicke. Als Material der Anihaftschicht **9** kann beispielsweise ein Material mit der Kennziffer 7333 von Whitford oder mit der Kennziffer 456-401 von DuPont verwendet werden. Andere ähnliche Materialien können selbstverständlich auch verwendet werden.

Anstelle einer Beschichtung **5** mit einer haftvermittelnden Schicht direkt auf der Oberfläche des Grundkörpers **3** und einer Antihaftschicht **9** als Deckschicht auf der haftvermittelnden Schicht **7,** kann auch eine Beschichtung **21** mit einer Hartschicht **25,** einer haftvermittelnden Schicht **27,** einer Zwischenschicht **29** und einer Antihaftschicht **31** bestehen. Es können auch Beschichtungen auf den Grundkörper aufgebracht werden, bei denen die Zwischenschicht und auch die Hartstoffschicht nicht vorhanden sind. Die Zwischenschicht **29** ist in der Regel eine korrosionshemmende Schicht.

Das in **Figur 3** dargestellte beschichtete Küchengerät **20** hat analog zu dem in **Figur 2** dargestellten Küchengerät **1** ebenfalls eine Beschichtung, hier mit **21** gekennzeichnet, welche auf der Oberfläche **23** eines aufgerauten Grundkörpers **24** angeordnet ist. Im Gegensatz zu den zwei Schichten **7** und **9** der Beschichtung **5** hat die Beschichtung **21** hier vier Schichten, nämlich eine auf dem Grundkörper **24** liegende Hartschicht **25,** dann eine haftvermittelnde Schicht **27,** dann eine Zwischenschicht **29** und als letztes eine Antihaftschicht **31.**

Die Hartstoffschicht **25** wird mit einem thermischen Sprühverfahren aufgebracht und besteht hier beispielsweise aus einem Gemisch von einhundert bis sechzig Gewichtsprozent Aluminiumoxid (Al₂O₃) und null bis vierzig Gewichtsprozent Titandioxid (TiO₂). Derartige Hartschichten sind beispielsweise in der EP 1 048 751 beschrieben. Anstelle von Aluminiumoxid und Titandioxid als Material der Hartschicht **25** können auch andere keramische Oxide, Nitride, Carbide, Oxinitride oder Carbo-Oxinitride eines oder mehrerer Elemente aus den chemischen Gruppen IVb bis VIb, des Aluminiums, des Nickels oder des Siliziums oder deren Mischungen verwendet werden. Zur Gruppe IVb gehören Titan (Ti), Zirkon (Zr) und Hafnium (Hf). Zur Gruppe Vb gehören Vanadium (V), Niob (Nb) und Tantal (Ta). Zur Gruppe VIb gehören Chrom (Cr), Molybdän (Mo) und Wolfram (W).

Die haftvermittelnde Schicht **27** und die Antihaftschicht **31** sind analog zur haftvermittelnden Schicht 7 und zur Antihaftschicht **9** ausgebildet.

Als Zwischenschicht kann beispielsweise ein Material mit der Kennziffer 7232 von der Firma Whitford oder mit der Kennziffer 456-605 von der Firma DuPont verwendet werden.

Fasern, insbesondere Carbonfasern können nun in allen Schichten **25, 27**, **29** und **31** entsprechend obigen Vorgaben oder auch nur in einzelnen Schichten enthalten sein.

Carbonfasern sind dunkel. Eine Schicht mit eingelagerten Carbonfasern wird somit immer eine graue bis dunkel Farbe aufweisen, wobei die eingelagerten Fasern einen schillernden optischen Effekt hervorrufen können, sofern das Schichtmaterial transparent bzw. diffusiv ist. Soll dieser schillernde Effekt unterbunden werden, wird man die betreffende Schicht dunkel pigmentieren. Diese dunkle Pigmentierung hat zudem den Vorteil, dass Schichtverletzungen in der Regel der Antihaftschicht, welche deren Antihaftwirkung nicht stören, kaum mehr sichtbar sind.

Ein.Beschichtungsverfahren des Küchengerätes **1** bzw. **20** wird anhand der Erzeugung einer vierschichtigen Beschichtung **21** beschrieben. Diese Beschichtung **21** enthält nämlich sämtliche oben erläuterten Schichten. Sollen Beschichtungrn mit weniger Schichten hergestellt werden, sind die entsprechenden Verfahrensschritte wegzulassen.

In einem erste Verfahrensschritt wird der Grundkörper **24** des Küchengerätes **20,** z. B. ein Pfannenboden, für die nun vorzunehmende Beschichtung vorbehandelt. Hierzu wird die Oberfläche entfettet und mit Korundpulver sandbestrahlt. Das Korundpulver hat feine Körner, denen grobe Körner beigemischt sind. Die groben Körner erzeugen auf der zu beschichtenden Oberfläche eine Rauigkeit von etwa einhundert bis zweihundert Mikrometern. Dieser grob aufgerauten Oberflächenstruktur wird eine feine Rauigkeit durch die feineren Körner von etwa zehn bis dreissig Mikrometern überlagert.

Zur Erzeugung der Hartschicht **25** wird nach dem Aufrauen das ganze Küchengerät (z.B. eine Pfanne, selbstverständlich ohne Griff und sonstiges Zubehör) in einem Ofen auf eine Temperatur unter 600°C gebracht. Vorzugsweise wird eine Temperatur von 300°C bis 450°C gewählt. Unmittelbar nach Erreichen dieser Temperatur wird ein Gemisch mit 100 bis 60 Gewichtsprozent Aluminiumoxid (Al₂O₃) und 0 bis 40 Gewichtsprozent Titandioxid (TiO₂) aufgebracht. Es werden hier beispielsweise etwa sechzig Gewichtsprozent Aluminiumoxid und vierzig Gewichtsprozent Titandioxid als homogenes Gemisch in einem Plasmasprühverfahren als thermisches Sprühverfahren mit beigemischten Carbonfasern **11** aufgebracht. Die aufgebrachte Hartschicht **25** wirkt schwarz.

Auch die Carbonfasern können Diamantkristalle enthalten, welche deren Härte und auch Wärmeleitfähigkeit erhöhen.

Vereinfacht ausgedrückt, gibt das Aluminiumoxid als relativ preisgünstiges Material der Hartschicht **25** die notwendige Härte, während Titandioxid zusammen mit den Carbonfasern **11** dieser Hartschicht **25** die Duktilität und die dunkle bzw. schwarze Farbe gibt. Durch die Duktilität des Titandioxids ist eine gute Resistenz der Beschichtung gegenüber grossen Temperaturschwankungen gegeben, wie sie nun einmal bei Bratpfannen auftreten. Die Carbonfasern **11** erzeugen eine unebene Oberseite der Hartschicht **25** und greifen in die durch die Aufrauung entstandene unebene Oberseite des Grundkörpers **24** ein.

Nach dem Aufsprühen der Hartschicht **25** lässt man den Küchengegenstand abkühlen. Auf die Hartschicht **25** wird die haftvermittelnde Schicht **27** aufgebracht. Das Schichtmaterial liegt als Suspension vor. Dieser Suspension können die oben erwähnten Fasern **11** sowie auch ein dunkles Pigment beigemischt werden. Es wird eine Schichtdicke von einigen Mikrometern aufgebracht. Diese Suspension dringt in die Rauigkeit und die Poren der Hartschicht **25** ein. Anschliessend wird der Küchengegenstand in einem Ofen in mehreren Stufen (100°C, 250°C, 400°C) auf 400°C bis 430°C erhitzt und auf der Endtemperatur etwa zehn bis fünfzehn Minuten gehalten.

In einem analogen Verfahren wird die Zwischenschicht **29** anschliessend aufgebracht.

Als antihaftende Deckschicht **31** werden ein bis drei Lagen eines Fluorpolymers, bevorzugt PTFE (Polytetrafluorethylen), als Suspension nach einem Abkühlen des Küchengerätes auf Raumtemperatur aufgebracht. Diese Suspension dringt ebenfalls in eine noch verbliebene Rauigkeit und in die Poren ein. Nach dem Aufbringen wird ein Erhitzungsprogramm analog demjenigen der Schicht **27** gefahren. Dadurch, dass auch hier die Endtemperatur zehn bis fünfzehn Minuten gehalten wird, erfolgt ein Einbrennen des PTFEs. Die Erweichungstemperatur des PTFE liegt bei 360°C. Die Temperatur des Gegenstands ist somit während des Einbrennens eindeutig über dieser Temperatur, so dass die Suspensionspartikel zu einer zähen und elastischen Schicht gesintert werden. Durch das Zusammensintern entsteht eine elastische PTFE-Deckschicht **31,** welche sich mit einer Schichtdicke von zwei bis zehn Mikrometer an die verbleibende Rauigkeit der darunter liegenden Zwischenschicht **29** gut anschmiegt.

Bei dem fertig beschichteten Küchengerät wird man vorzugsweise die äusserste, freie Oberfläche einem Bürstprozess unterziehen. Bei diesem Bürsten werden zu weit hervorstehende Faserenden entfernt, damit diese Enden nicht erst beim typischen Gebrauch abbrechen. Die abgebrochenen Faserteile sind zwar gesundheitlich unbedenklich, könnten jedoch bei einer Neubenutzung der Pfanne bei genauem Hinsehen Spuren in einem hellen Bratgegenstand hinterlassen. Es wird eine Bürste verwendetet, deren Borstenhärte die Beschichtungsoberfläche nicht verkratzt, jedoch zu weit überstehende Faserenden abbricht. Unter zu weit überstehende Faserenden werden Faserenden verstanden, welche bei der Benutzung eines weichen Spachtels, wie er bei antihaft-beschichteten Küchengeräten verwendet wird, abbrechen würden.

Anstelle von Bratpfannen als Küchengeräte können auch Oberflächen von Bügeleisen, Töpfen, Oberflächen von Maschinenteilen wie Lagerschalen, ... mit den oben beschrieb benen Beschichtungen beschichtet werden.

Anstatt die haftvermittelnde Schicht **27**, Zwischenschicht **29** und die Antihaftschicht **31,** welche jeweils als Suspensionen vorliegen, als einzelne Schichten aufzubringen und stufenweise zu erhitzen, können lediglich nur nach einem Antrocknen nacheinander die haftvermittelnde Schicht **27,** die Zwischenschicht **29** und dann die Antihaftschicht **31** aufgebracht werden. Diese Schichten **27**, **29** und **31** können dann zusammen, wie oben beschrieben, stufenförmig oder annähernd kontinuierlich ansteigend erhitzt werden.

Als Schichtmaterial, in dem die Fasern liegen können, kann auch ein Hartstoff mit antihaftender Wirkung verwendet werden. Hierbei wird nach dem Aufrauhen des zu beschichtenden Küchengerätebodens der ganze Gegenstand (z.B. Pfanne) in einem Ofen auf eine Temperatur unter 600°C gebracht. Vorzugsweise wird eine Temperatur von 450°C gewählt. Unmittelbar nach Erreichen dieser Temperatur wird ein Gemisch mit 80 bis 40 Gewichtsprozent Aluminiumoxid (Al₂O₃) und 20 bis 60 Gewichtsprozent Titandioxid (TiO₂) aufgebracht. Es werden hier beispielsweise etwa sechzig Gewichtsprozent Aluminiumoxid und vierzig Gewichtsprozent Titandioxid mit einer Beimischung von fünf bis zehn Gewichtsprozent Aluminium-Fluörid (AlF₃) als homogenes Gemisch in einem Plasmasprühverfahren als thermisches Sprühverfahren aufgebracht. Das beigemischte Aluminium-Fluorid erzeugt eine antihaftende Wirkung in der Hartschicht **7.** Die Verwendung von Aluminium-Fluorid ist nicht zwingend; es können auch andere Materialien mit antihaftender Wirkung verwendet werden. Es ist jedoch auf eine Verträglichkeit mit dem Aluminiumoxid-Titandioxid-Gemisch zu achten. Auch muss das verwendete Material unter den thermischen Bedingungen des Plasmasprühens bestehen bleiben. Beim Plasmasprühen werden Diamantkristalle beigemischt, welche einen Durchmesser zwischen 0,5 µm und 10 µm haben. Das Aluminiumoxid-Titandioxid-Aluminiumfluorid-Gemisch mit eingelagerten Diamantkristallen wird bis zu einer Schichtdicke von 50 µm bis 150 µm auf die Oberfläche **5** aufgesprüht. Die aufgebrachte Schicht kann schwarz wirken.

Das Beimischen der Diamantkristalle hat derart zu erfolgen, dass sie keiner Temperatur ausgesetzt werden, welche über 900°C liegt. Bei 900°C kann sich nämlich Diamant in Graphit verwandeln bzw. bei Sauerstoffzutritt verbrennen. Von diesen 900°C sollte ein ausreichender temperaturmässiger Abstand gehalten werden.

Beigemischte Diamantkristalle verbessern die thermische Leitfähigkeit, verbessern Abrasionseigenschaften und verbessern eine Kompatibilität der Materialien, da es sich um Kohlenstoff handelt.

Vereinfacht ausgedrückt gibt das Aluminiumoxid als relativ preisgünstiges Material der Schicht 7 die notwendige Härte, während Titandioxid dieser Schicht **7** die Duktilität und die dunkle bzw. schwarze Farbe gibt. Durch die Düktilität des Titandioxids ist eine gute Resistenz der Beschichtung gegenüber grossen Temperaturschwankungen gegeben, wie sie nun einmal bei Bratpfannen auftreten.

## Patentansprüche

1. Mit einer Beschichtung (5; 21) versehener, vorzugsweise metallischer, Gegenstandsgrundkörper (3; 24), insbesondere Küchengerät (1; 20), **dadurch gekennzeichnet, dass** das wenigstens eine Schicht (9; 31) der Beschichtung (5; 21) ein Schichtmaterial mit einem Fasermaterial enthält, wobei durch das Fasermaterial eine verformte Oberfläche der wenigsten einen Schicht (9; 31) mit Erhöhungen ausgebildet ist, wobei die Erhöhungen einen stochastischen Abstand zwischen 1 µm und 1000 µm haben, wobei die verformte Oberfläche der wenigsten einen Schicht eine freie Beschichtungsoberfläche ist und eine durch den stochastischen Abstand der Erhöhungen erzeugte Rauigkeit einen Selbstreinigungseffekt bewirkt und/oder eine Antihaftwirkung erzeugt bzw. verbessert.

2. Beschichteter Gegenstandsgrundkörper (3; 24) nach Anspruch 1, **dadurch gekennzeichnet, dass** wenigstens zwanzig Gewichtsprozent der Fasern (11) des Fasermaterials eine Faserlänge aufweist, welche wenigstens fünf Prozent länger als die zu erzeugende Schichtdicke der das Fasermaterial aufweisenden Schicht ist, und somit wenigstens diese längeren Fasern (11) mit ihren Enden die verformte Oberfläche mit Tiefen und Höhen bilden.

3. Beschichteter Gegenstandsgrundkörper (3; 24) nach Anspruch 1 oder 2, **dadurch gekennzeichnet, dass** jede Schicht eine Schichtdicke zwischen 2 µm und 150 µm aufweist.

4. Beschichteter Gegenstandsgrundkörper (3; 24) nach einem der Ansprüche 1 bis 3, **dadurch gekennzeichnet, dass** die Fasern (11) des Fasermaterials Carbonfasern sind und vorzugsweise die Fasern Diamantkristalle enthalten.

5. Beschichteter Gegenstandsgrundkörper (3; 24) nach Anspruch 1, **dadurch gekennzeichnet, dass** die wenigsten eine Schicht (9; 31) der Beschichtung (5; 21), eine Antihaftschicht (9; 31) ist, welche als Antihaftschichtmaterial Polytetrafluorethylen (PTFE), Perfluoralcyd (PFA) oder Fluorethylenpropylen (FEP) aufweist.

6. Beschichteter Gegenstandsgrundkörper (24) nach einem der Ansprüche 1 bis 5, **dadurch gekennzeichnet, dass** auf dem Gegenstandsgrundkörper (24) eine Hartstoffschicht (25), dann eine haftvermittelnde Schicht (27), und vorzugsweise hierauf eine Zwischenschicht (29) angeordnet ist.

7. Beschichteter Gegenstandsgrundkörper (3; 24) nach einem der Ansprüche 1 bis 6, **dadurch gekennzeichnet, dass** auf dem Gegenstandsgrundkörper (3; 24) eine haftvermittelnde Schicht (7; 27), und vorzugsweise auf dieser eine Zwischenschicht (29) angeordnet ist.

## Claims

1. Base body (3; 24) provided with a coating (5; 21), the base body being preferably a metallic one, in particular a kitchen utensil (1; 20), **characterized in that** the at least one layer (9; 31) of the coating (5; 21) contains a layer material with a fiber material, where due to the fiber material, a deformed surface of the at least one layer (9; 31) is formed with protrusions, the protrusions having a stochastic distance between 1 µm and 1000µm, where the deformed surface of the at least one layer is a free coating surface and where a roughness created by the stochastic distance of the protrusions causes a self-cleaning effect and/or causes or improves, respectively, an anti-adhesive effect.

2. Coated base body (3; 24) of an object according to Claim 1, **characterized in that** at least twenty percent by weight of the fibers (11) of the fiber material have a fiber length which is at least five percent longer than the layer thickness of the layer with the fiber material which is to be created, and **in that** therefore at least these longer fibers (11) with their ends form the deformed surface with recesses and protrusions.

3. Coated base body (3; 24) of an object according to Claim 1 or 2, **characterized in that** each layer has a layer thickness between 2 µm and 150 µm.

4. Coated base body (3; 24) of an object according to one of Claims 1 through 3, **characterized in that** the fibers (11) of the fiber material are carbon fibers and preferably contain diamond crystals.

5. Coated base body (3; 24) of an object according to Claim 1, **characterized in that** the at least one layer (9; 31) of the coating (5; 21) is an anti-adhesive layer (9; 31) which contains polytetrafluoroethylene - PTFE, perfluoroalkyd - PFA or fluoroethylenepropylene - FEP as an anti-adhesive layer material.

6. Coated base body (24) of an object according to one of Claims 1 through 5, **characterized in that** on the base body (24) of the object, a hard material layer (25), then an adhesion promoting layer (27) and preferably on top of this, an intermediate layer (29) are arranged.

7. Coated base body (3; 24) of an object according to one of Claims 1 through 6, **characterized in that** on the base body (3; 24) of the object, an adhesion promoting layer (7; 27) and preferably on top of this, an intermediate layer (29) are arranged.

## Revendications

1. Corps de base d'un objet (3 ; 24), de préférence métallique, doté d'un revêtement (5 ; 21), en particulier un appareil de cuisine (1 ; 20), **caractérisé en ce que** la couche (9 ; 31), au nombre d'au moins une, du revêtement (5 ; 21) comporte un matériau de couche avec un matériau en fibres, le matériau en fibres ayant pour effet de créer une surface déformée de la couche (9 ; 31), au nombre d'au moins une, avec des protubérances, les protubérances présentant une distance stochastique comprise entre 1 µm et 1000 µm, la surface déformée de la couche, au nombre d'au moins une, étant une surface de revêtement libre, et une rugosité créée par la distance stochastique des protubérances produisant ou améliorant un effet d'autonettoyage et/ou un effet antiadhésif.

2. Corps de base d'un objet (3 ; 24) présentant un revêtement, selon la revendication 1, **caractérisé en ce qu'**au moins vingt pour cent en poids des fibres (11) du matériau en fibres présentent une longueur de fibre qui est plus longue d'au moins cinq pour cent que l'épaisseur de couche à produire pour la couche présentant le matériau en fibres, et ainsi au moins ces fibres (11) plus longues forment avec leurs extrémités la surface déformée avec des creux et des pics.

3. Corps de base d'un objet (3 ; 24) présentant un revêtement, selon la revendication 1 ou 2, **caractérisé en ce que** chaque couche présente une épaisseur de couche comprise entre 2 µm et 150 µm.

4. Corps de base d'un objet (3 ; 24) présentant un revêtement, selon l'une des revendications 1 à 3, **caractérisé en ce que** les fibres (11) du matériau en fibres sont des fibres de carbone et les fibres comportent de préférence des cristaux de diamant.

5. Corps de base d'un objet (3 ; 24) présentant un revêtement, selon la revendication 1, **caractérisé en ce que** la couche (9 ; 31), au nombre d'au moins une, du revêtement (5 ; 21) est une couche antiadhésive (9 ; 31) qui présente, en tant que matériau de couche antiadhésive, du polytétrafluoroéthylène (PTFE), du perfluoro-alkoxy (PFA) ou du fluoroéthylène-propylène (FEP).

6. Corps de base d'un objet (24) présentant un revêtement, selon l'une des revendications 1 à 6, **caractérisé en ce que** sur le corps de base d'objet (24), est disposée une couche de matériau dur (25), puis une couche (27) favorisant l'adhérence et, de préférence, sur celle-ci, une couche intermédiaire (29).

7. Corps de base d'un objet (3 ; 24) présentant un revêtement, selon l'une des revendications 1 à 7, **caractérisé en ce que** sur le corps de base d'objet (3 ; 24), est disposée une couche (7 ; 27) favorisant l'adhérence et, de préférence, sur celle-ci, une couche intermédiaire (29).
